# EUROPEAN PATENT APPLICATION

(11) **EP 4 671 957 A1**
(43) Date of publication of application: **31.12.2025**
(21) Application number: 25176580.6
(22) Date of filing: 15.05.2025
(51) Int. Cl.: G06F 3/12

(54) **IMAGE FORMATION APPARATUS AND METHOD FOR CONTROLLING IMAGE FORMATION APPARATUS**

(30) Priority: 22.05.2024 JP 2024083215
(71) Applicant: CANON KABUSHIKI KAISHA, Tokyo 146-8501 (JP)
(72) Inventor: SHIBA, Yuki, Tokyo (JP)
(74) Representative: WESER & Kollegen Patentanwälte PartmbB

(57) **Abstract**

An image formation apparatus (100) has a reception unit (203, 204) configured to receive a print job for performing printing using a print unit and a cost calculation job for calculating cost of printing to be performed using the print unit and a control unit (204) configured to display, on a display unit (206), a first screen displaying a print job list including a print job received but not a cost calculation job received and a second screen displaying a cost calculation job list including a cost calculation job received but not a print job received. Each of the first screen and the second screen includes a field (513, 514) for receiving an instruction for switching display to the first screen or to the second screen.

## Description

### BACKGROUND OF THE INVENTION

### Field of the Invention

The present disclosure relates to an image formation apparatus and a method for controlling the image formation apparatus.

### Description of the Related Art

Printing companies introducing and using image formation apparatuses may give an estimate of printing cost of a print job sent from a client before printing the print job and use the estimate to negotiate a business deal. Also, in a case where, e.g., a new print medium is introduced or there is a change in the price of an existing print medium or ink, printing companies may give an estimate of printing cost and present it to a client.

Giving an estimate of printing cost of a print job using the image formation apparatus itself enables calculation of values equivalent to the actual printing cost because the estimate uses parameters and maintenance results which are unique to the apparatus and same as those to be used in actual printing.

Japanese Patent Laid-Open No. 2021-142658 discloses a technique of estimating printing cost before execution of printing in a case where a print job submitted to the image formation apparatus includes an estimate instruction. Japanese Patent Laid-Open No. 2021-28140 discloses a technique where an image formation apparatus is set to a cost calculation mode and then does not print a print job submitted thereto, but only performs cost calculation.

What is demanded is a technique for improving a user's work efficiency in performing cost calculation.

### SUMMARY OF THE INVENTION

The present invention in its first aspect provides an image formation apparatus as specified in claims 1 to 19. The present invention in its second aspect provides a method for controlling an image formation apparatus as specified in claim 20.

Further features of the present invention will become apparent from the following description of exemplary embodiments with reference to the attached drawings.

### BRIEF DESCRIPTION OF THE DRAWINGS

Fig. 1 is a diagram showing an example schematic configuration of an image formation apparatus;
Fig. 2 is a functional block diagram showing a control configuration of the image formation apparatus;
Fig. 3 is a flowchart showing an example of print processing;
Fig. 4 is a diagram showing an example flowchart for processing of a print job and a cost calculation job;
Figs. 5A and 5B are diagrams each showing an example UI screen;
Fig. 6 is a diagram showing an example settings screen for cost calculation of a cost calculation job;
Fig. 7 is diagram showing an example flowchart for processing of a print job and a cost calculation job;
Fig. 8 is a diagram showing an example UI screen displaying a cost calculation job list; and
Fig. 9 is a flowchart showing an example of processing performed upon receipt of a print job or a cost calculation job.

### DESCRIPTION OF THE EMBODIMENTS

Preferred embodiments of the present disclosure are described in detail below with reference to the drawings attached hereto. Note that the embodiments below are not provided to limit the matters of the present disclosure, and not all the combinations of features described in the embodiments below are necessarily essential as solutions provided by the present disclosure. Note that the same reference numeral is used to denote the same components.

### <<First Embodiment>>

### <Overview>

An overview of a first embodiment is described. As described earlier, giving an estimate of printing cost of a print job using the image formation apparatus itself enables calculation of values equivalent to the actual printing cost because the estimate uses parameters and maintenance results which are unique to the apparatus and same as those to be used in actual printing.

Conceivable cases where a user submits a job to an image formation apparatus include a case where the user wants the image formation apparatus to perform an actual printing operation to obtain a printed product and a case where the user wants the image formation apparatus to only calculate the cost of the printing of the job. A job for performing a printing operation is called a print job, and a job for calculating printing cost is called a cost calculation job.

In a case where the image formation apparatus has a mode dedicated for cost calculation, a user cannot execute printing in this dedicated mode. In other words, the user cannot perform both of printing and cost calculation.

Also, printing and cost calculation may require different operations on a submitted job. Also, a user who operates the image formation apparatus for the printing purpose and a user who operates the image formation apparatus for the cost calculation purpose may differ. By not having a mode dedicated for cost calculation, an image formation apparatus can receive both a print job and a cost calculation job. However, in a case where a print job and a cost calculation job are both submitted to the image formation apparatus, the image formation apparatus will have a job list where the print job and the cost calculation job coexist. The coexistence of a print job and a cost calculation job may lower a user's work efficiency.

The embodiments below describe examples of how to improve a user's work efficiency in handling a cost calculation job and a print job.

### <Configuration of the Image Formation Apparatus>

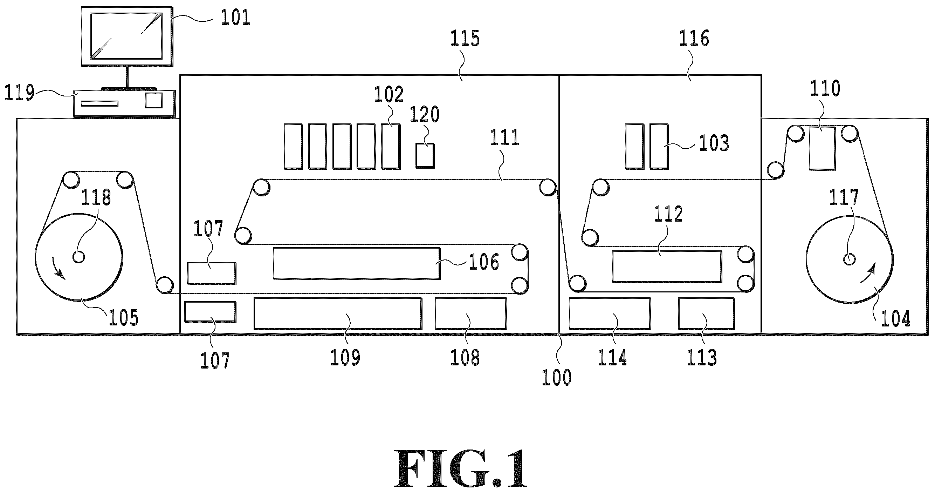

Fig. 1 is a diagram showing an example schematic configuration of an image formation apparatus according to the present embodiment. The image formation apparatus is also an image formation system having a plurality of apparatuses (units) as will be described later. An image formation apparatus 100 is an apparatus to form an image on a continuous print medium (hereinafter referred to as rolled paper) 111 on which printing can be done continuously. In the present embodiment, the image formation apparatus 100 has a paper feed device 104 that feeds the rolled paper 111 and a first unit 116 for printing with a special color. The image formation apparatus 100 also has a second unit 115 for printing with basic colors, a paper discharge device 105 for winding up the rolled paper 111, and a user interface (UI) operation panel 101.

The paper feed device 104 is a device to supply the rolled paper 111 into the image formation apparatus 100. The paper feed device 104 rotates the paper core of the rolled paper 111 about a rotary shaft 117 to convey the rolled paper 111 wound on the paper core toward the inside of the image formation apparatus 100 at a certain speed using a plurality of rollers (such as, e.g., conveyance and paper feed rollers). The paper discharge device 105 is a device to wind up the rolled paper 111 having been conveyed through the image formation apparatus 100 onto a paper core in a rolled manner. The paper core is attached to a rotary shaft 118 and is rotated about the rotary shaft 118 to wind up the rolled paper 111 at a certain speed as a printed product, the rolled paper 111 having been conveyed to the paper core by a plurality of rollers (such as, e.g., conveyance and paper discharge rollers). The printed product is wound on the paper core and kept in the rolled state.

Before printing starts, a user does the following work: taking the rolled paper 111 from the paper feed device 104 and threading it into the paper discharge device 105. For example, a user sets the rolled paper 111 in the paper feed device 104 and then threads the leading edge of the rolled paper 111 over a skew correction device 110. Next, the user threads the leading edge of the rolled paper 111 under a first printing device 103 in the first unit 116. In the present embodiment, the first printing device 103 is a printhead configured to perform printing using a special color ink (such as, e.g., white ink) other than cyan (C), magenta (M), yellow (Y), and black (K). The user threads the leading edge of the rolled paper 111 under a drying device 112 and over a cooling device 113 and a cooling device 114. Next, the user threads the leading edge of the rolled paper 111 under a mark detection sensor 120 and second printing devices 102 in the second unit 115, under a drying device 106, over a cooling device 108, and over a cooling device 109.

Although the mark detection sensor 120 is used in the present embodiment for positioning of an image formed by the second printing devices 102 on an image formed by the first printing device 103, a scanner may be used in place of the mark detection sensor 120. The second printing devices 102 in the present embodiment are printheads configured to print basic colors for printing (CMYK). The user threads the leading edge of the rolled paper 111 through a connected scanner device 107 and winds it onto the paper discharge device 105.

After threading the rolled paper 111 through the image formation apparatus 100 in this way, the user submits a print job to a control PC (print control device) 119 of the image formation apparatus 100. After submitting the print job, the user presses a Start Print button on the UI operation panel 101. Upon receipt of this print instruction, the image formation apparatus 100 starts printing. Note that a printed image is scanned by the mark detection sensor 120, and the control PC 119 performs image analysis on the scanned image to inspect for any problem on the printed product.

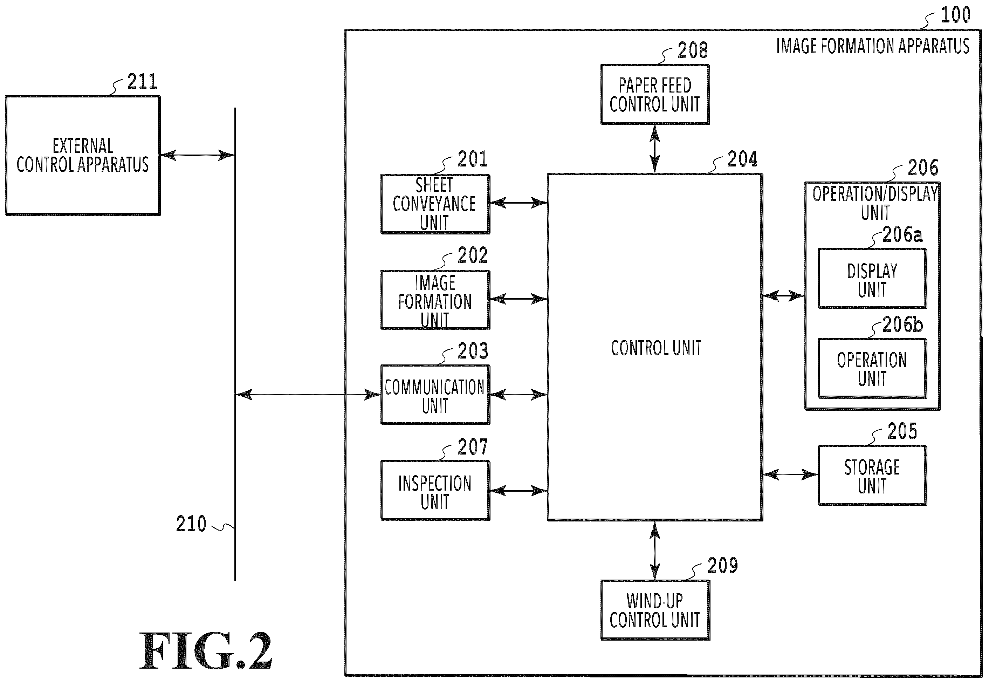

Fig. 2 is a functional block diagram showing a control configuration of the image formation apparatus 100. Using Fig. 2, details of the control configuration of the image formation apparatus 100 are described. As shown in Fig. 2, the image formation apparatus 100 includes a sheet conveyance unit 201, an image formation unit 202, a communication unit 203, a control unit 204, a storage unit 205, an operation/display unit 206, an inspection unit 207, a paper feed control unit 208, and a wind-up control unit 209.

The sheet conveyance unit 201 is a conveyance mechanism for the rolled paper 111 inside the image formation apparatus 100. For example, the sheet conveyance unit 201 conveys the rolled paper 111 conveyed thereto from the paper feed control unit 208 to the image formation unit 202 using a plurality of rollers, and the rolled paper 111 having passed through the image formation unit 202 is conveyed to the wind-up control unit 209. The image formation unit 202 forms an image on the rolled paper 111 supplied from the paper feed control unit 208 based on print data about which an output instruction is received. The image formation unit 202 controls both the first printing device 103 and the second printing devices 102. The image formation unit 202 conveys the roller paper 111 having the image formed thereon toward the paper discharge device 105. The communication unit 203 is configured of a communication control card such as, for example, a local area network (LAN) card. The communication unit 203 transmits and receives various kinds of data to and from an external control apparatus 211 (e.g., a personal computer) connected to a communication network 210 such as a LAN or a wide area network (WAN). The external control apparatus 211 has installed therein, e.g., a printing application needed for printing.

The control unit 204 has, for example, a central processing unit (CPU), a random access memory (RAM), and the like. The CPU of the control unit 204 reads a program out of various programs stored in the storage unit 205, such as a system program or a processing program, loads it into the RAM, and executes processing according to the program loaded. For example, the control unit 204 can perform print processing for executing a print job in response to a user instruction. The storage unit 205 is configured of, for example, non-volatile semiconductor memory (i.e., flash memory) or a hard disk drive (HDD). Stored in the storage unit 205 are various programs including the system program and processing program executed by the control unit 204 and various kinds of data needed for the execution of these programs. The operation/display unit 206 is configured of, for example, a liquid crystal display (LCD) with a touch panel and includes a display unit 206a and an operation unit 206b. The operation/display unit 206 corresponds to the UI operation panel 101.

The display unit 206a displays various kinds of information on a display screen according to display control signals inputted from the control unit 204. The operation unit 206b includes operation keys such as a numeric keypad or a start key and outputs an operation signal to the control unit 204 upon receipt of various input operations performed by a user. The operation/display unit 206 is used to, for example, configure settings of job information in execution of a job. As the settings of job information, a user can set any conditions such as, for example, the type of sheet used, printing speed information, the number of sheets to print, the number of copies to print, print length, print weight, and print diameter.

Next, a description is given of an operation that the image formation apparatus 100 performs in performing print processing on the rolled paper 111. First, a user creates print data using an external device such as the external control apparatus 211. As instructed by the user, the external control apparatus 211 configures the job's print settings and setting on delivered roll length and transmits these pieces of information to the image formation apparatus 100 via a communication network. Via the communication unit 203, the control unit 204 of the image formation apparatus 100 receives image data and a job ticket included in the job transmitted from the external control apparatus 211, the job ticket including, e.g., information on the job's print settings and delivered roll length (hereinafter referred to as job parameters).

Note that in the present embodiment, the control unit 204 is configured to determine based on the job ticket transmitted from the external control apparatus 211 whether the received job is a print job or a cost calculation job. No printing operation is performed based on a cost calculation job.

For example, a job ticket describes job parameters, such as "copies = 100." In' the present embodiment, a job ticket describes a parameter indicating whether the job is a print job or a cost calculation job, like "job type = print job." Note that numerical values for identifying job types may be assigned for a job parameter described in a job ticket, and a job parameter may include one of such numerical values. For instance, a print job may be defined as "1," and a cost calculation job may be defined as "0." Then, a job ticket may say "job type = 1." Note that the present disclosure is not limited to the above example as long as a job type can be identified based on a job ticket. **In** the present embodiment, the control unit 204 performs processing according to the type of the job received. For example, upon receipt of a print job, the control unit 204 adds the received print job to a print job list, and upon receipt of a cost calculation job, the control unit 204 adds the received cost calculation job to a cost calculation job list. The display unit 206a is configured to display lists including added jobs. These processes will be described in detail later. Upon receipt of a print instruction based on a print job, the control unit 204 controls the sheet conveyance unit 201, the image formation unit 202, the paper feed control unit 208, the wind-up control unit 209, and the like to perform print processing on the rolled paper 111 based on the job.

The inspection unit 207 is a device to check whether an image is being printed on a print medium without any ejection failure. The image formation unit 202 prints, on a print medium, a detection pattern used to inspect for ejection failure. By scanning the detection pattern with a scanner, the inspection unit 207 checks whether the printed image shows ejection failure. Upon detection of ejection failure, the control unit 204 stops the operation of the image formation apparatus 100. There are various inspection methods that the inspection unit 207 can perform, such as printing the detection pattern and scanning the detection pattern with a scanner, directly scanning a printed image with a camera or scanner and inspecting the printed image, or monitoring how the nozzles are ejecting.

The mechanism part (the units) constituting the image formation apparatus 100 is controlled by the control unit 204 or the other units. In the present embodiment, a state where the hardware (mechanism) of the image formation apparatus 100 is powered off but software as systems of the units such as the control unit 204 is running is defined as a standby state. In the standby state, system control involving no mechanism operation of the image formation apparatus can be performed. More specifically, in the standby state, like in the state where the image formation apparatus is up and running, the operation/display unit 206 can display the apparatus' status, the control unit 204 can execute print processing on a job, or various other settings can be configured. For example, cost calculation processing based on a cost calculation job can be executed in the standby state. Also, in the present embodiment, there are two ways to turn off the image formation apparatus: a standby state where only the mechanism part is off and a shut-down state where the apparatus is completely off. The shut-down state refers to a state where both hardware and software are off, and all the various operations are ceased.

### <Flowchart of Print Processing>

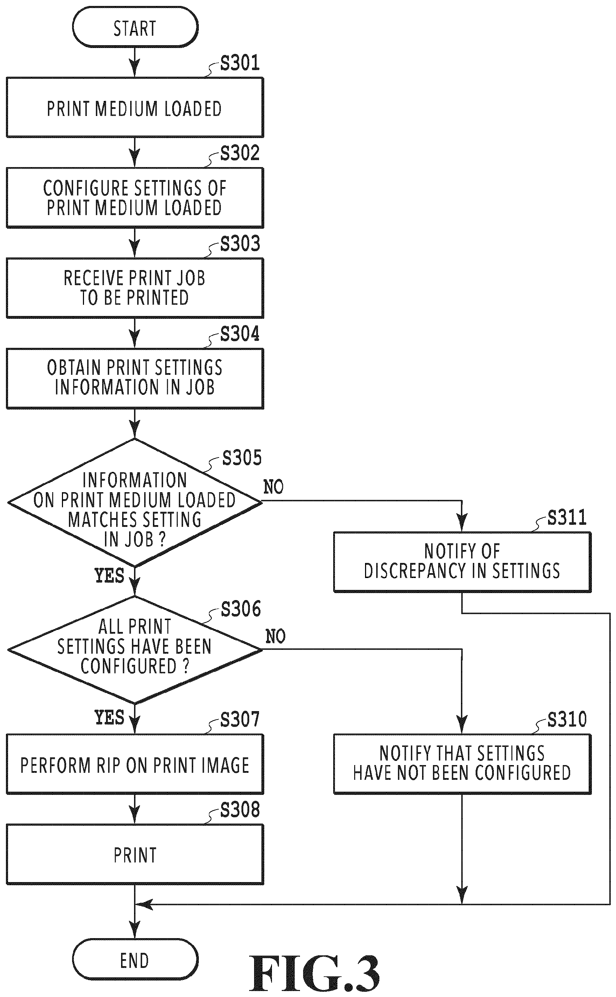

Fig. 3 is a flowchart showing an example of print processing performed by the image formation apparatus 100. First, to facilitate understanding, the following describes basic processing of the print processing performed by the image formation apparatus 100. The flowchart in Fig. 3 shows processing performed after a print medium is attached to the image formation apparatus 100 and before the print medium is printed. The processing in the flowchart in Fig. 3 is implemented by the CPU of the control unit 204 by reading various programs stored in the storage unit 205 such as the system program and processing programs, loading the programs into the RAM, and executing various kinds of processing according to the programs loaded. Note that some or all of the functions in the steps in Fig. 3 may be implemented by hardware such as an ASIC or an electric circuit. The letter "S" in the description of the processing denotes it is a step in the flowchart (this applies to the other flowcharts as well).

In S301, the image formation apparatus 100 waits for a user to load a print medium. As described earlier, a print medium in the present embodiment is the rolled paper 111 wound into a roll. The user loads a print medium wound into a roll by threading the print medium through a path in the conveyance mechanism of the printer and through the plurality of conveyance rollers. Then, the print medium is fixed to the wind-up core attached to the paper discharge device 105, which is the termination of the conveyance path.

In S302, the control unit 204 configures settings of the print medium loaded. For example, before print processing starts, based on user operation, the control unit 204 sets the type of the print medium loaded in the image formation apparatus 100. This setting is configured by the user by specifying an appropriate one of print medium types registered in the image formation apparatus 100 in advance. Then, an optimal conveyance parameter linked to the print medium information stored in advance is set, and the image formation apparatus 100 can properly convey the print medium loaded therein. This conveyance parameter is set in a print job as well.

Note that parameters set in a print job may be, in addition to the conveyance parameter, whether white is used in printing, a covering rate of white printed, drying temperature after white printing, drying temperature in color printing, and tension applied to the print medium. Parameters set in a print job may also include, e.g., the types of ink used or the type of color profile used in color matching. Note that these parameters are an example, and the present embodiment is not limited to them. In a case where a type which is the same as the type of the loaded print medium is not stored in the image formation apparatus 100, a print medium type with physical properties or features similar to those of the attached print medium is selected from the print medium information stored and set as the type of the print medium. Physical properties include the type of the material of the print medium (coated paper, high-quality paper, or film), the thickness, width, and basis weight of the print medium, and the like.

In S303, the control unit 204 receives a print job to be printed. For example, the control unit 204 receives a print job based on a user instruction, the print job including (describing) data to be printed, the type of medium to be printed, print settings, and the like. The processing in S302 and S303 is executed by user operation performed on the control PC 119 of the image formation apparatus 100. The print job created on the external control apparatus 211 is transmitted to the image formation apparatus 100 and is accumulated as a job in a queue. In S303, once the print job to be processed is specified based on a user instruction, the control unit 204 receives the print job to be printed.

In S304, the control unit 204 obtains print settings information in the print job received in S303. The control unit 204 analyzes the print settings information obtained.

In S305, before starting printing, the control unit 204 determines whether the information on the print medium being loaded matches a setting in the job. In other words, the control unit 204 determines whether the print medium type specified in the print job matches the type of the print medium loaded in the printer. If the print medium type specified in the print job does not match the type of the print medium loaded in the printer, the control unit 204 proceeds to S311. If it is determined that the print medium type specified in the print job matches the type of the print medium loaded in the printer, the control unit 204 proceeds to S306. In S311, the control unit 204 notifies the user that printing cannot be executed because of a discrepancy in settings. After that, the control unit 204 ends the processing of the flowchart shown in Fig. 3.

In S306, the control unit 204 determines whether all the print settings needed for printing have been configured. If it is determined that not all the print settings needed for printing have been configured, the control unit 204 proceeds to S310. If it is determined that all the print settings needed for printing have been configured, the control unit 204 proceeds to S307. In S310, the control unit 204 informs the user that the print settings have not been configured yet. After that, the control unit 204 ends the processing in the flowchart shown in Fig. 3.

In S307, the control unit 204 executes raster image processor (RIP) processing on the print image data specified in the print job. In the RIP processing, vector image data, which is image data described with commands, is converted into raster image data, which is a collection of print pixels. Also, RIP processing may have a color conversion function for converting the colors of the print data. In S308, the control unit 204 performs printing using the print image data generated by the RIP processing. After that, the control unit 204 ends the processing of the flowchart shown in Fig. 3.

Note that the processing described above is exemplary, and the present disclosure is not limited to this. For example, upon receipt of a print job, the RIP processing may be performed on the print job even in a case where the print job is not the current print target. Also, the description of the processing of the flowchart in Fig. 3 is a general description of processing performed upon receipt of a print job. Processing also considering a cost calculation job is described below.

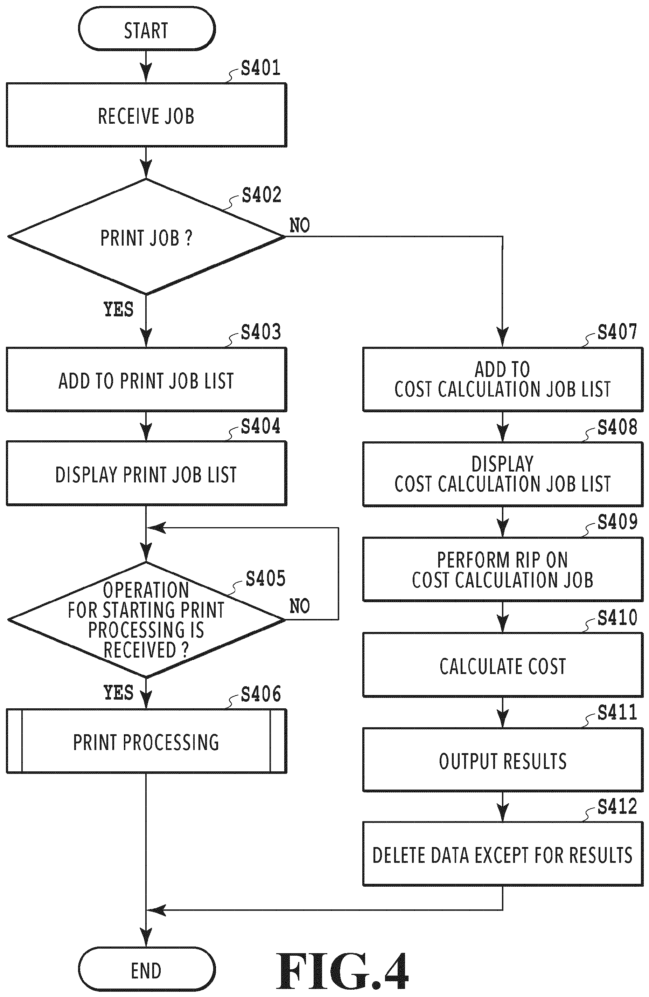

Fig. 4 is a diagram showing an example flowchart of how the image formation apparatus 100 in the present embodiment processes a print job and a cost calculation job. Processing of a print job and a cost calculation job in the present embodiment is described below with reference to Fig. 4. A trigger for starting the processing in the flowchart shown in Fig. 4 is the image formation apparatus 100 receiving a job.

In S401, the communication unit 203 receives a job. For example, the communication unit 203 receives a job from the external control apparatus 211. S401 is, as described above, a trigger for starting the processing in Fig. 4.

In S402, the control unit 204 determines whether the job received in S401 is a print job. Note that the present embodiment assumes two job types: a print job and a cost calculation job. Thus, not being a print job means that the job is a cost calculation job. In the present embodiment, as described earlier, a job ticket included in the job includes information indicating whether the job is a print job or a cost calculation job. Thus, the control unit 204 determines whether the job is a print job or a cost calculation job by referring to the information in the job ticket included in the job. If it is determined that the job received in S401 is a print job, the control unit 204 proceeds to S403. If it is determined that the job received in S401 is not a print job, i.e., a cost calculation job, the control unit 204 proceeds to S407.

In S403, the control unit 204 adds the job received in S401 to a print job list as a print job. Next, in S404, the control unit 204 displays the print job list on the display unit 206a. In this event, on the display unit 206a, the control unit 204 also displays, e.g., buttons for operating the job included in the print job list. In the present embodiment, the operation/display unit 206 is configured to be able to receive various operations performed by the user on a print job included in the print job list, such as changing a job parameter, starting print processing, cancelling a print job, and duplicating a print job. The buttons for operating a job correspond to buttons for receiving the various operations above.

Next, in S405, the control unit 204 determines whether an operation for starting print processing has been received from the user via the operation/display unit 206. If it is determined that an operation for starting print processing has been received, the control unit 204 proceeds to S406. The control unit 204 waits until receiving an instruction for starting print processing and continues the processing in S405.

In S406, the control unit 204 carries out print processing on the print job about which an instruction for starting print processing has been received. The print processing in S406 corresponds to the processing in and after S304 in the flowchart of print processing shown in Fig. 3. Upon completion of the print processing, the control unit 204 ends the processing in the flowchart shown in Fig. 4.

Next, a description is given of processing performed in a case where the job received is a cost calculation job. In S407, the control unit 204 adds the job received in S401 to a cost calculation job list as a cost calculation job.

Next, in S408, the control unit 204 displays the cost calculation job list on the display unit 206a. In this event, the control unit 204 also displays, e.g., buttons for operating the job included in the cost calculation job list on the display unit 206a. In the present embodiment, the operation/display unit 206 is configured to be able to receive various operations performed by the user on a cost calculation job included in the cost calculation job list, such as outputting results of cost calculation or deleting the cost calculation job. The buttons for operating a job correspond to buttons for receiving the various operations above. The format of a file in which a cost calculation result is outputted may be, for example, a text file such as a comma-separated values (CSV) file, a spreadsheet file, or other formats.

Next, in S409, the control unit 204 performs RIP on the cost calculation job. In the present embodiment, the control unit 204 starts RIP on the cost calculation job in a state where software is running and there is no RIP processing currently being executed. Note that in a case where the control unit 204 is configured to be able to perform a plurality of RIP processes at the same time and there is a task left to perform RIP processing on, the control unit 204 starts RIP on the cost calculation job even while performing RIP processing on another job. Note that in the present embodiment, the control unit 204 automatically starts RIP processing and cost calculation processing (S410) to be described later as soon as a cost calculation job is added to a cost calculation job list. However, the present disclosure is not limited to this example. For example, a button for starting cost calculation may be placed on the display unit 206a. Then, the RIP processing and the cost calculation processing may be started once the operation unit 206b receives an operation for instructing cost calculation from the user. Alternatively, the RIP processing may be performed automatically, and then the cost calculation after that may be started upon receipt of an instruction from the user. Alternatively, according to the job parameters or apparatus settings, a mode may be switchable between a mode of automatically starting cost calculation and a mode of waiting for an instruction to start cost calculation from the user. In regard to this mode switching based on the parameters, settings for regular print jobs, namely a setting for control of starting RIP and a setting for automatic starting of printing, may be applied commonly to cost calculation jobs as well.

The cost calculation processing in S409 is similar to the RIP processing on a print job (S307). A cost calculation job is a job for performing RIP processing and cost calculation based on job parameters. Thus, cost calculation can be performed even in a state where the image formation apparatus 100 is in standby.

Next, in S410, the control unit 204 calculates cost for the cost calculation job. For example, based on the raster image data converted by the RIP processing, the control unit 204 calculates an amount of ink to be ejected to form the image and calculates ink cost. In the present embodiment, the storage unit 205 of the image formation apparatus holds various kinds of information necessary for cost calculation. For example, information on differences between apparatuses in how print heads eject ink, which are caused by manufacturing tolerances or the like, information indicating that the ejection behavior has changed with usage, and the like are stored in the storage unit 205 as reference values indicative of printhead behavior. In the RIP processing performed by the image formation apparatus 100, image processing is performed with reference to these reference values so as to be able to calculate an accurate ink ejection amount. If an external terminal or the like is used to calculate ink cost, these reference values need to be reflected on the external terminal side in real time. Further, all the parameters according to combinations of a sheet type and print settings need to be held by the external terminal side. It is therefore difficult to perform accurate cost calculation in an external terminal from the perspective of data quantity and real-time implementation. Because cost calculation processing is performed within the image formation apparatus 100 in the present embodiment, accurate cost of a cost calculation job can be calculated. Moreover, performing cost calculation within the image formation apparatus 100 does not require externally outputting highly confidential information, such as information used for calculating ink consumption, including tables and table values used in the image processing for calculation. It is therefore useful to perform cost calculation within the image formation apparatus 100 from the perspective of security as well. Although an image formation apparatus employing an inkjet printing method is used as an example and described herein, it is to be noted that the present embodiment can be similarly applied widely to image formation apparatuses employing printing methods other than the inkjet printing method to calculate cost using reference values according to the image formation unit (printing unit).

In the present embodiment, the control unit 204 calculates not only ink cost, but also sheet cost including maintenance and additional cost added based on print quantity. These pieces of information used for cost calculation may be information registered in the apparatus in advance or information included as the job parameters and transmitted.

Next, in S411, the control unit 204 puts together the calculated cost in a report and outputs the results. For example, the control unit 204 may transmit the results to the external control apparatus 211 through the communication unit 203, save the results in an output folder in the image formation apparatus 100, display the results on the display unit 206a, or combine these modes. Settings on, e.g., the destination to output the results and whether to output the results automatically may be configured based on information registered in the apparatus in advance or may be configured based on information included in the job parameters.

Next, in S412, the control unit 204 deletes data except for the cost calculation results. In other words, the control unit 204 deletes data used for cost calculation. The data deleted in S412 may include the image data and job ticket included in the job, the raster image data, and other data created for printing. The storage unit 205 of the image formation apparatus 100 has a limited storage space and handles a cost calculation job as a job not to be printed. Thus, leaving data on cost calculation jobs undeleted may affect operations for print jobs. For this reason, in the present embodiment, the control unit 204 deletes data except for the cost calculation results after outputting the results. After completing S412, the control unit 204 ends the processing in the flowchart shown in Fig. 4.

This is the basic flow of processing of a print job and processing of a cost calculation job in the present embodiment. Note that the processing shown in Fig. 4 shows the basic flow of the processing, and processing different from the processing shown in Fig. 4 may be performed. For example, after a print job list to which a print job has been added is displayed, a user may perform no operation, or a user may perform an operation to check a cost calculation job. In such cases, processing according to the operation received is performed. Also, after that, without waiting for reception of a new print job, a user may perform an operation to display a print job list, specify a print job to be printed, and issues a print instruction. In this way, the processing shown in Fig. 4 merely shows an example of the basic processing, and the processing other than Fig. 4 may be performed appropriately according to user operations.

In the present embodiment, the print job list used in S403 and the cost calculation job list used in S407 are separate independent lists. In the present embodiments, as will be described later, the control unit 204 displays the print job list and the cost calculation job list separately on the display unit 206a. Then, a user operation for a cost calculation job is received as a processing system different from a print job, so that a user handling a print job can perform operations on the job without having to pay attention to cost calculation jobs.

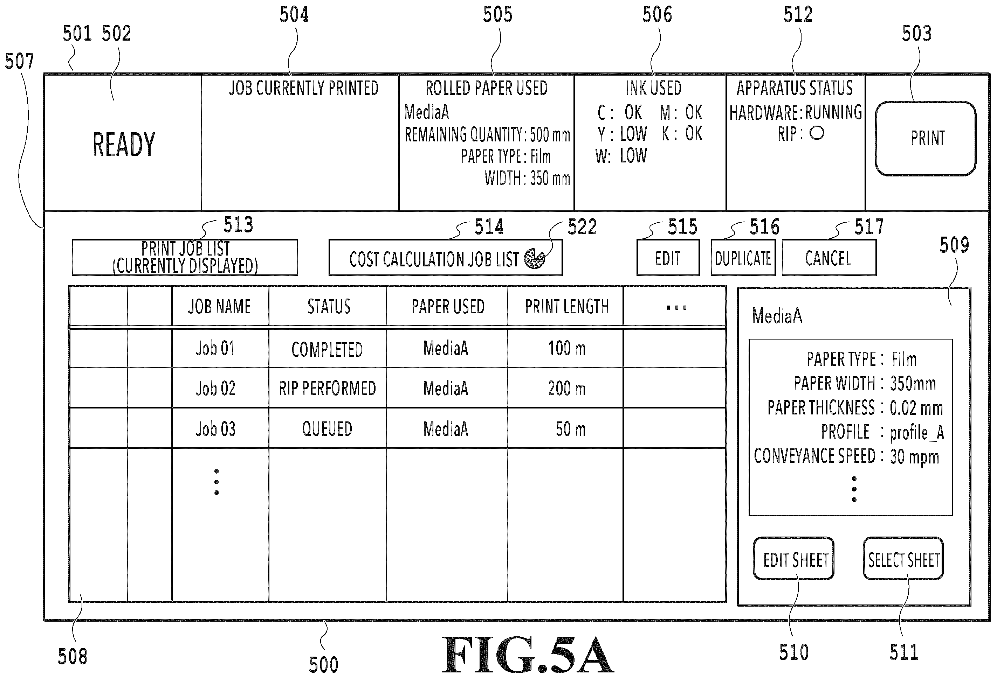

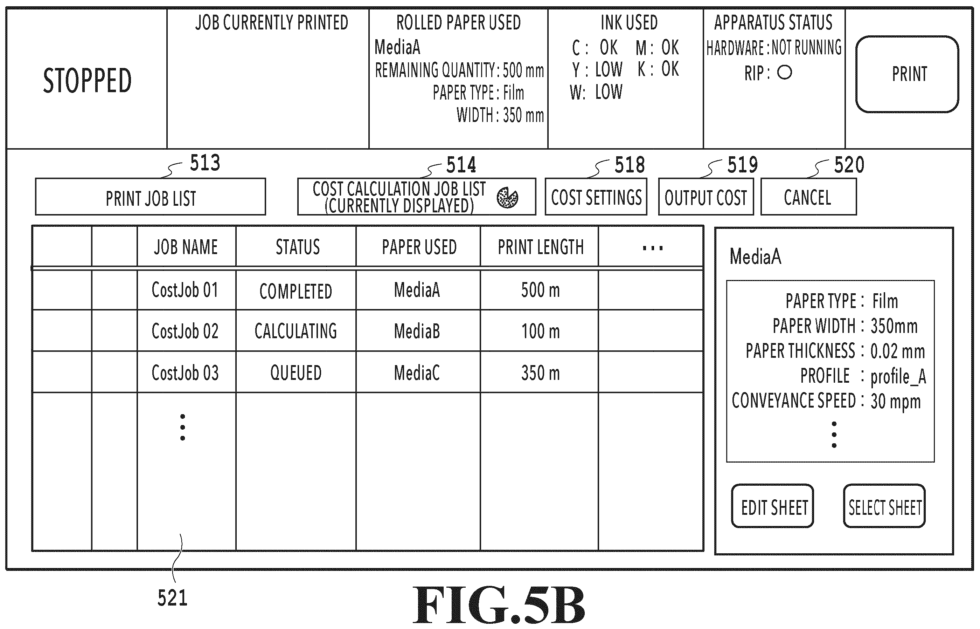

Figs. 5A and 5B are diagrams showing an example of a UI screen displaying a print job list or a cost calculation job list. A UI screen 500 in Figs. 5A and 5B is the entire UI displayed on the UI operation panel 101. Fig. 5A is an example of the UI screen displaying a print job list, and Fig. 5B is an example of the UI screen displaying a cost calculation job list. First, the configuration of the entire UI screen 500 is described using Fig. 5A. Note that the UI screen in Fig. 5B displaying a cost calculation job list is described focusing mainly on differences from Fig. 5A because the UI screen in Fig. 5B has the same basic configuration as that in Fig. 5A.

First, a description is given using Fig. 5A. Summary information related to the status of the image formation apparatus 100 is displayed in a status display area 501, such as the current status of the image formation apparatus 100 and information on a job currently printed. An operation status indicator 502 of the image formation apparatus 100 shows the current status of the operation status indicator 502. In Fig. 5A, the operation status is "Ready" waiting to print. Besides "Ready," other operation statuses include "Stopped" and "Printing." Upon detection of pressing of a Print button 503 by a user, the image formation apparatus 100 starts printing the print job selected by the user. A currently-printed job indicator 504 displays the name of the job being printed. A print medium information indicator 505 displays information on the print medium attached to the image formation apparatus 100, such as its name and remaining quantity. An ink status indicator 506 displays the types of inks used and the levels of the inks. An apparatus status 512 displays hardware's running status and RIP performability. While hardware is running, the image formation apparatus 100 can perform printing. In the RIP performable state, the image formation apparatus 100 can execute RIP processing on a job.

In the present embodiment, the status display area 501 includes, as an example, the operation status indicator 502 of the image formation apparatus 100, the Print button 503, the currently-printed job indicator 504, the print medium information indicator 505, the ink status indicator 506, and the apparatus status 512. However, the present disclosure is not limited to these indicators and may display an indicator not shown in Figs. 5A and 5B.

A work area 507 is a work area used by a user to perform operations. To check detailed information on any of the pieces of information in the status display area 501, a user presses a corresponding status indicator field on the status display area 501. Based on the pressing operation, the image formation apparatus 100 can display related detailed information in the work area 507. For example, upon receipt of pressing of the field of the currently-printed job indicator 504, the image formation apparatus 100 switches content displayed in the work area 507 to display of a print job list, as shown in Fig. 5A. Note that a method for switching content displayed in the work area 507 is not limited to this example. For example, the image formation apparatus 100 may be provided with a menu screen and configured to switch content displayed upon receipt of selection performed on the menu.

A print job list 508 displays information on a print job, such as an ID indicative of the name of the print job, the current status, and a print medium used. Upon receipt of pressing of the Print button 503 with a job in this list being selected, the image formation apparatus 100 starts print processing using the selected job. A print medium information indicator 509 displays detailed information on a print medium. An Edit Sheet button 510 is a button for receiving an instruction to edit information on the print medium displayed in the print medium information indicator 509. A Select Sheet button 511 is a button for receiving an instruction to read new sheet information different from the sheet information currently set. Settings read using the Select Sheet button 511 are displayed in the print medium information indicator 505 as information on the print medium attached to the image formation apparatus 100.

Upon receipt of pressing of a cost calculation job list button 514 while the print job list 508 is being displayed, the image formation apparatus 100 displays, in the work area 507, a cost calculation job list 521 and buttons for operating a cost calculation job, as shown in Fig. 5B. By contrast, upon receipt of pressing of a print job list button 513 while the cost calculation job list 521 is being displayed, the image formation apparatus 100 displays, in the work area 507, the print job list 508 and buttons for operating a print job, as shown in Fig. 5A. n this way, in the present embodiment, the print job list and the cost calculation job list are displayed separately and independently as a job list displayed in the work area 507. More specifically, a print job list and a cost calculation job list are selectively switched and displayed.

In the present embodiment, as shown in Fig. 5A, while a print job list is being displayed, buttons for receiving operations and instructions for a print job are displayed, namely an Edit Parameters button 515, a Duplicate button 516, and a Cancel button 517. By contrast, while a cost calculation job list is being displayed, buttons for receiving operations and instructions for a cost calculation job are displayed, namely an Output Cost button 519, a Cancel button 520 for the job, and a Cost Settings button 518. Note that the various operation buttons are not limited to the example shown in Figs. 5A and 5B. Other buttons usable to operate a print job or a cost calculation job may be placed on the work area 507.

**In** the present embodiment, an icon 522 indicating that RIP processing or calculation processing is being performed is displayed over the print job list button 513 or the cost calculation job list button 514. This allows the user to easily know the type of job on which RIP processing or calculation processing is being performed.

Although the present embodiment is configured to use a button to switch display between a print job list and a cost calculation job list, the present disclosure is not limited to this as long as they are displayed separately and independently. For example, a print job list and a cost calculation job may be displayed in separate regions on the same screen.

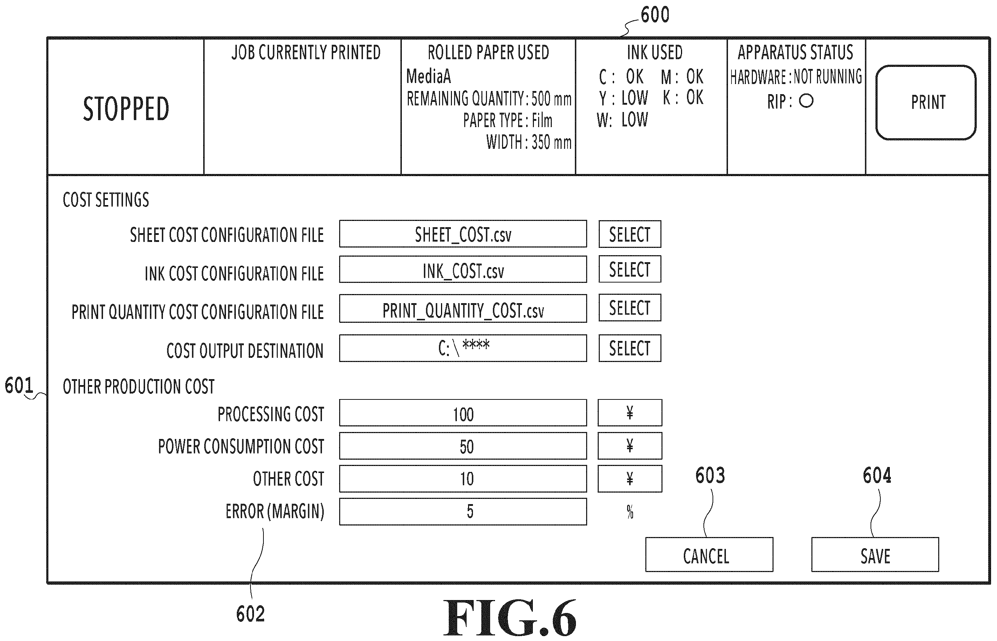

Fig. 6 is a diagram showing an example of a settings screen related to cost calculation of a cost calculation job. The present embodiment assumes that display in the work area 507 is switched to a cost settings field 601 upon pressing of a Cost Settings button 518 in Fig. 5B. However, a trigger to change the screen is not limited to the Cost Settings button 518. Also, the cost calculation settings screen is not limited to the example shown in Fig. 6.

On a cost settings screen 600, cost setting items 602, a Cancel button 603, and a Save button 604 are displayed in the cost settings field 601. In the present embodiment, the cost setting items 602 include setting items on configuration files describing sheet cost, ink cost, and print quantity cost. The cost setting items 602 also include other setting items such as a folder to which to output a cost result file and a setting on additional production cost needed for operations other than printing to add to cumulative total cost. In a case where there are other settings necessary for cost calculation, such as a setting on additional maintenance cost, the cost setting items 602 may additionally include such settings. Also, instead of setting configuration files describing sheet cost, ink cost, and print quantity cost, a screen may be provided where those items can be edited and operated.

How an image formation apparatus can perform RIP processing on a print job and on a cost calculation job differs depending on the image formation apparatus. For example, some apparatuses cannot perform parallel RIP processing (raster image generation processing) and can perform RIP processing only on one job at a time, while others can perform parallel processing but only on a limited number of jobs. In the present embodiment, which of a print job and a cost calculation job the image formation apparatus 100 performs RIP processing on first is on a first-come-first-served basis. However, the present disclosure is not limited to this example. For example, an indicator for the priority level for starting RIP may be provided on the settings screen and used to set which job type to prioritize: a print job or a cost calculation job. Also, a setting may be configured so that only cost calculation jobs may be operated in parallel or not in parallel. Also, the order in which RIP processing is performed may be settable as needed based on user operation.

In the present embodiment, once the user presses the Save button 604 after configuring various settings on the settings screen shown in Fig. 6, the image formation apparatus 100 registers the configured settings. After that, once the Output Cost button 519 is pressed in Fig. 5B, cost calculation is performed based on the settings, and results of the cost calculation are outputted.

As thus described, the present embodiment can improve a user's work efficiency in cost calculation. More specifically, in the present embodiment, the image formation apparatus 100 manages and displays a submitted job separately depending on whether it is a print job or a cost calculation job. This can improve the work efficiency for both a user handling print jobs and a user handling cost calculation jobs. As an example, the following considers a scenario where while a first user is using the image formation apparatus 100 to print using a print job, a different second user submits a cost calculation job. In such a scenario, the present embodiment can prevent the job unintended by the first user (the cost calculation job) from being mixed into the print job list. In this way, even in a case where a cost calculation job is submitted to the image formation apparatus 100 which is printing a print job, the work efficiency is not lowered for the first user who has requested the printing, without increasing the content of the print job list.

Although the present embodiment describes an example where cost calculation based on a cost calculation job is performed after a user selects the job from a cost calculation job list and issues an instruction, it is to be noted that the present disclosure is not limited to this example. As soon as a cost calculation job is submitted, the image formation apparatus 100 may output calculation results automatically, not based on user operation performed on the image formation apparatus 100. In this way, a trigger for the image formation apparatus 100 to start a print job and a trigger for the image formation apparatus 100 to start a cost calculation job may differ. In other words, a print job may be performed based on an operation performed on the image formation apparatus 100 itself, and a cost calculation job may be performed not based on an operation performed on the image formation apparatus 100 itself. To implement such processing, the flowchart of the processing may branch accordingly.

### <<Second Embodiment>>

In the example described in the first embodiment, after results of cost calculation using a cost calculation job are outputted, data except for the results, such as, e.g., image data and a job ticket in the job and raster image data, is deleted so as to create a sufficient storage space in the image formation apparatus 100 for print jobs. However, it is possible that the image formation apparatus 100 has large enough storage space because, for example, the image formation apparatus 100 has a storage unit 205 with large capacity or because a storage medium is added as an extension to the image formation apparatus 100. In such cases, data related to a cost calculation job does not necessarily need to be deleted. The present embodiment describes an example where data related to a cost calculation job is saved even after results of cost calculation based on the cost calculation job are outputted. Saving data related to a cost calculation job such as image data and a job ticked included in the cost calculation job makes it possible to improve user operability in using the cost calculation job for actual printing.

The basic apparatus configuration and the basic flow of processing in the present embodiment are similar to the example described in the first embodiment. The following mainly describes differences from the first embodiment.

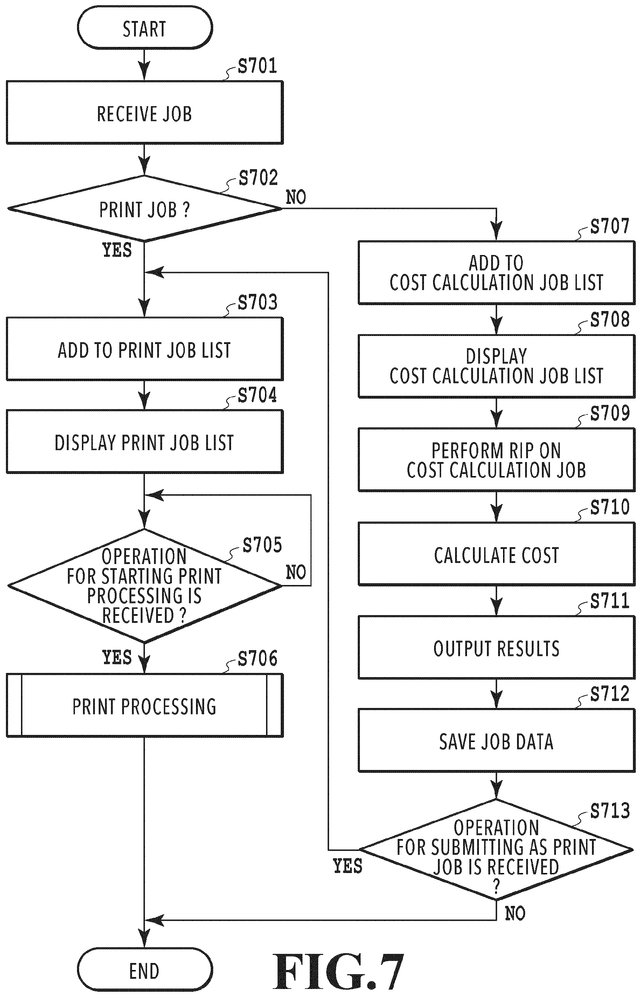

Fig. 7 is a diagram showing an example flowchart of how the image formation apparatus 100 of the present embodiment processes a print job and a cost calculation job. Processing of a print job and processing of a cost calculation job are described below with reference to Fig. 7. The processing in the flowchart shown in Fig. 7 is started once the image formation apparatus 100 receives a job.

S701 to S711 in Fig. 7 are the same processing as S401 to S411 in Fig. 4 described in the first embodiment and are therefore not described.

In S711, the control unit 204 outputs results of the cost calculation and then proceeds to S712. In S712, the control unit 204 saves data related to the cost calculation job (hereinafter referred to as job data) to the storage unit 205. In the present embodiment, job data is image data and a job ticket included in a job transmitted from the external control apparatus 211, the job ticket including, e.g., information on the job's print settings and delivered roll length. However, the present disclosure is not limited to this example. For example, the control unit 204 may save raster image data obtained by RIP to the storage unit 205 by including it in the job data. In the configuration where raster image data obtained by RIP is also saved, in a case where the cost calculation job for which cost calculation has already been done is used for a print job, the RIP processing in S307 can be skipped. Also, the job data to save may include thumbnail image data roughly representing the image data in the job to be displayed in a job list.

Also, the job data may be saved temporarily or permanently. For example, the amount of storage space for job data may be limited to a predetermined amount, and job data may be saved temporarily within this predetermined amount. Also, instead of being saved with no exception, job data on a cost calculation job may be saved selectively based on, e.g., user operation or a parameter included in the job ticket. Whether to save job data temporarily or permanently may also be determined based on, e.g., user operation or a parameter included in the job ticket. After S712, the control unit 204 proceeds to S713.

In S713, the control unit 204 determines whether an operation for instructing submission of a cost calculation job as a print job is received from the user. The present flowchart considers a case where the user selects, in the cost calculation job list being displayed, the cost calculation job about which cost calculation has been completed and instructs submission of the cost calculation job as a print job. Upon receipt of an operation for instructing submission of the cost calculation job as a print job from the user, the control unit 204 proceeds to S703. In other words, the control unit 204 adds the cost calculation job to the print job list as a print job. The processing after that is the same as the processing of a print job. If an operation for instructing submission of the cost calculation job as a print job is not received from the user, the control unit 204 ends the processing in the flowchart shown in Fig. 7.

Although the processing in S713 is included in the flowchart in Fig. 7 here, an operation for submitting the cost calculation job as a print job can be received outside of the processing in Fig. 7. Thus, the control unit 204 is configured to be able to receive an instruction for submission of the user-selected cost calculation job as a print job at any timing. Then, upon receipt of an operation for instructing submission of the cost calculation job as a print job from the user, the control unit 204 performs the processing for adding the cost calculation job to the print job list as a print job accordingly.

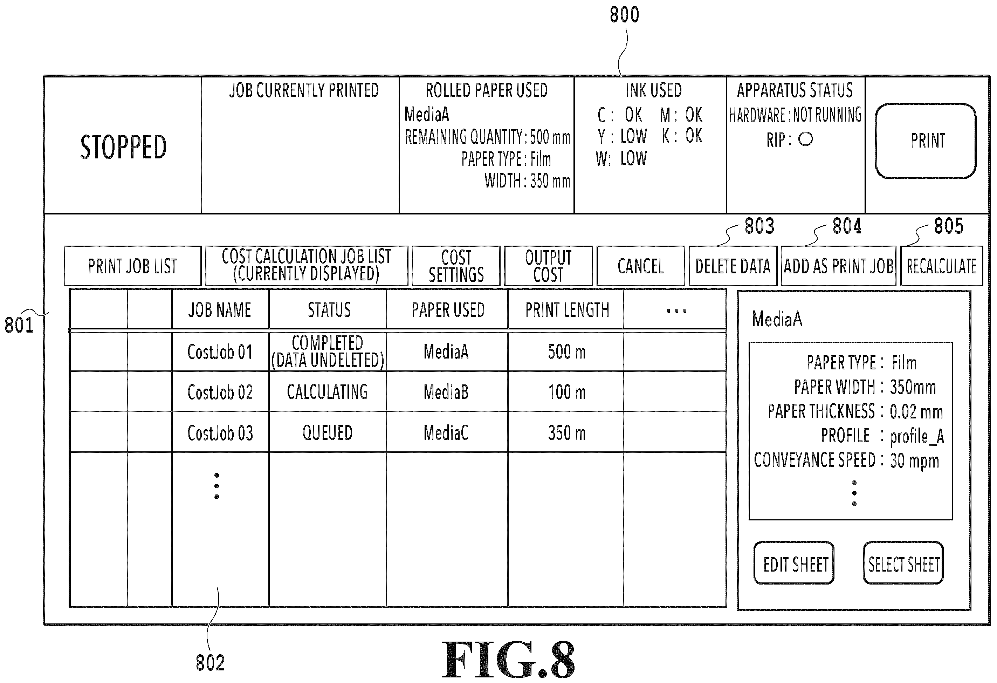

Fig. 8 is a diagram showing an example of a UI screen displaying a cost calculation job list. The UI screen in Fig. 8 is basically the same as the UI screen described using Fig. 5B, and therefore descriptions are omitted for portions that are the same as those in Fig. 5B. The following mainly describes differences from Fig. 5B.

In the present embodiment, a work area 801 displaying a cost calculation job list 802 additionally displays a Delete Data button 803, an Add as Print Job button 804, and a Recalculate button 805. A user selects a cost calculation job to work on from the cost calculation job list 802 and presses the Delete Data button 803 or the Add as Print Job button 804. Receiving this user operation, the image formation apparatus 100 performs processing corresponding to the button pressed. Also, Fig. 8 shows an example where the cost calculation job list 802 shows, as the job status, information indicating whether the job data is saved.

In the image formation apparatus 100 of the present embodiment, job data on a cost calculation job about which cost calculation has been completed is automatically saved to the storage unit 205 of the image formation apparatus 100. A user can manually delete unnecessary job data. Specifically, a user selects a cost calculation job from the cost calculation jobs included in the cost calculation job list 802 and then presses the Delete Data button 803. The image formation apparatus 100 is configured to delete corresponding job data upon receipt of such a press operation. Also, a user selects a cost calculation job from the cost calculation jobs included in the cost calculation job list 802 and then presses the Add as Print Job button 804. The image formation apparatus 100 is configured to submit the corresponding job data as a print job upon receipt of such a press operation.

Also, a user selects a cost calculation job from the cost calculation jobs included in the cost calculation job list 802 and then presses the Recalculate button 805. The image formation apparatus 100 is configured to perform cost calculation of the selected cost calculation job again upon receipt of such a press operation. **In** the present embodiment, in performing cost calculation again, the image formation apparatus 100 performs cost calculation all over again as a new cost calculation job, leaving the history of the cost calculation performed before the recalculation. The present disclosure is however not limited to this example, and the image formation apparatus 100 may be configured to perform cost calculation using the cost calculation job about which cost calculation has already been performed and then overwrite the old results with the results thus calculated.

Note that in the event where a job about which cost calculation has not been completed yet or a job about which job data has already been deleted is selected in the cost calculation job list 802, the operation buttons may be disabled not to receive operations. Specifically, the image formation apparatus 100 may have conditions for enabling or disabling buttons under a predetermined condition so as not to allow pressing of the Delete Data button 803, the Add as Print Job button 804, and the Recalculate button 805.

As thus described, according to the present embodiment, regarding a job which has been used for cost calculation, data such as parameters used in the cost calculation can be submitted as a print job as they are. Then, for example, the following use scenario is possible. Specifically, after a user gives an estimate and makes a business deal, the user can use the job used for the estimate as a print job as it is. Further, in a case of giving an estimate again under different setting values for cost calculation, the user can conduct the cost calculation without having to resubmit a job, i.e., a cost calculation job. The present embodiment can thus improve a user's work efficiency.

### <<Third Embodiment>>

In the examples described in the first and second embodiments, a determination as to whether a job submitted to the image formation apparatus 100 is a print job or a cost calculation job is made based on information included in a job ticket. The present embodiment describes an example where the image formation apparatus 100 has different routes to receive a job: one for print jobs and one for cost calculation jobs. In this example, the image formation apparatus 100 determines whether the job submitted thereto is a print job or a cost calculation job based on the route through which the job is received.

The present embodiment describes an example where the external control apparatus 211 submits a job to a shared folder, called a hot folder, provided in the storage unit 205 of the image formation apparatus 100. The basic configuration is the same as those in the first and second embodiments and is therefore not described, and differences are mainly described.

First, the control configuration of the image formation apparatus 100 is described using Fig. 2. A hot folder is a dedicated folder which is provided in the storage unit 205 of the image formation apparatus 100 and in which information to be described in a job ticket is set, the information being, e.g., the job's print settings and delivered roll length. Once a job is submitted to the hot folder, job information assignment is automatically performed. The control unit 204 creates a default hot folder stored in the storage unit 205 as a shared holder. Also, once an operation for creating a hot folder is performed on the operation/display unit 206, the control unit 204 creates and adds a hot folder, setting specified job parameters.

In the present embodiment, the control unit 204 prepares (creates) a hot folder for print jobs and a hot folder for cost calculation jobs. Preparing a hot folder for cost calculation eliminates the need for a job ticket to include information indicating a job type. Also, in a case where a job ticket includes a special setting for cost calculation, a user does not need to prepare such a job ticket. In other words, the same data can be used for job data used as a print job and job data used as a cost calculation job. By submission of job data to a hot folder for a desired type by a user, settings on a corresponding job ticket are assigned to the job. The communication unit 203 is configured to monitor the hot folders and upon detection of job submission, notify the control unit 204 of a new job.

Note that there may be a plurality of hot folder settings for a hot folder, such as receiving both of image data and a job ticket in a job as a set or receiving image data and a job ticket in a job, the job ticket recording only differences in setting information. In a case where there is no hot folder registered in the storage unit 205, the control unit 204 automatically creates a hot folder at the timing of monitoring.

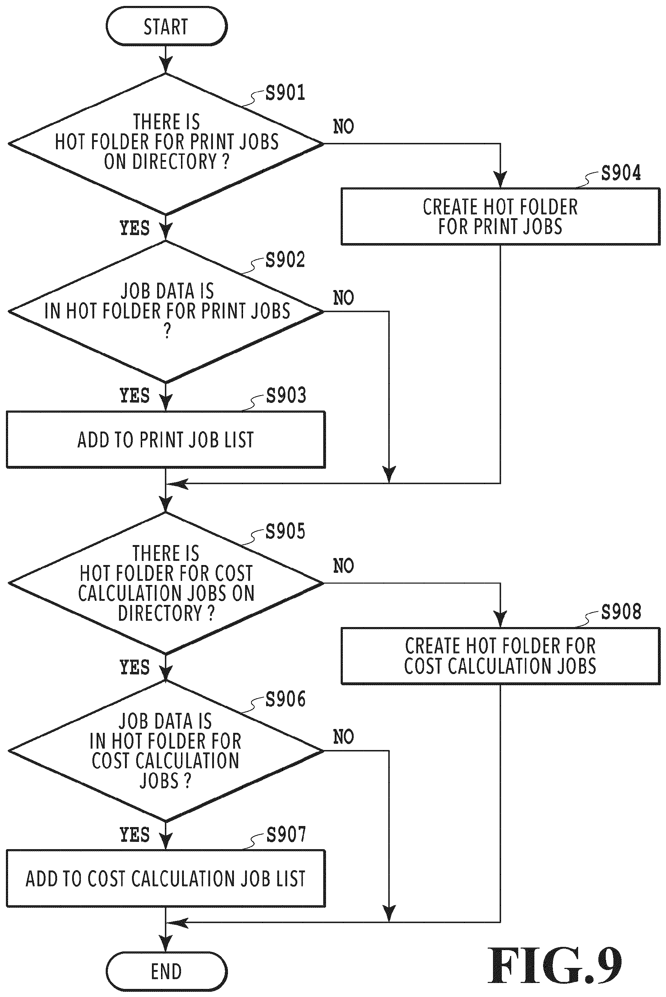

Fig. 9 is a flowchart showing an example of processing performed by the image formation apparatus 100 of the present embodiment in receiving a print job or a cost calculation job through a hot folder. The processing shown in Fig. 9 is part of monitoring processing performed regularly or irregularly by the image formation apparatus 100.

In S901, the control unit 204 determines whether a hot folder for print jobs is on a predetermined directory in the image formation apparatus. If a hot folder for print jobs is on a predetermined directory, the control unit 204 proceeds to S902. If a hot folder for print jobs is not on a predetermined directory, the control unit 204 proceeds to S904. Note that there may be a plurality of hot folders for print jobs, in which case the control unit 204 determines whether each of the hot folders is on the directory.

In S902, the control unit 204 determines whether there is any job data in the hot folder for print jobs. If job data is in the hot folder for print jobs, the control unit 204 proceeds to S903. If there is no job data in the hot folder for print jobs, the control unit 204 proceeds to S905. In the present embodiment, job data is assumed to be only image data in a job or a combination of image data and a job ticket in a job. Note that in a case where there are a plurality of hot folders for print jobs, the control unit 204 makes this determination for each of the hot folders.

In S903, the control unit 204 adds the job data placed in the hot folder for print jobs to a print job list. In this event, in a case where there is any flaw in the job's image data or job parameter, the control unit 204 may handle it as an error and not add the job data to a print job list.

In S905, the control unit 204 determines whether a hot folder for cost calculation jobs is on a predetermined directory in the image formation apparatus. If a hot folder for cost calculation jobs is on a predetermined directory, the control unit 204 proceeds to S906, and if a hot folder for cost calculation jobs is not on a predetermined directory, the control unit 204 proceeds to S908. There may be a plurality of hot folders for cost calculation jobs, in which case the control unit 204 determines whether each of the hot folders is on the directory.

In S906, the control unit 204 determines whether there is any job data in the hot folder for cost calculation jobs. If there is job data in the hot folder for cost calculation jobs, the control unit 204 proceeds to S907. If there is no job data in the hot folder for cost calculation jobs, the control unit 204 ends the processing in the flowchart shown in Fig. 9. As with a print job, job data for a cost calculation job is assumed to be only image data in a job or a combination of image data and a job ticket in a job. Note that in a case where there are a plurality of hot folders for cost calculation jobs, the control unit 204 makes this determination for each of the hot folders.

In S907, the control unit 204 adds the job data placed in the hot folder for cost calculation jobs to a cost calculation job list. In this event, in a case where there is any flaw in the job's image data or job parameter, the control unit 204 may handle it as an error and not add the job data to a cost calculation job list. Once the processing in S907 ends, the control unit 204 ends the processing in the flowchart shown in Fig. 9.

The processing in the flowchart in Fig. 9 in the present embodiment described above is to replace the processing in S401 to S403 and S407 in Fig. 4 described in the first embodiment. Similarly, the processing in the flowchart in Fig. 9 in the present embodiment described above is to replace the processing in S701 to S703 and S707 in Fig. 7 described in the second embodiment. After that, as described in the first and second embodiments, print processing or cost calculation processing is performed based on, e.g., user operation performed on the print job list or the cost calculation job list.

In the example of the present embodiment, as described, the image formation apparatus 100 uses hot folders to determine whether a job submitted thereto is a print job or a cost calculation job. However, routes through which the image formation apparatus 100 receives jobs are not limited to hot folders. The image formation apparatus 100 may be provided with a reception route performing communications dedicated for print jobs and a reception route performing communications dedicated for cost calculation jobs. Then, the image formation apparatus 100 may be configured to determine whether the job received is a print job or a cost calculation job based on the route through which the job is received.

Note that in the present embodiment, the image formation apparatus 100 creates and sets a hot folder for print jobs and a hot folder for cost calculation jobs using the settings specified by a user beforehand. However, they do not need to be created based on user operation. For example, settings on a hot folder for print jobs may be copied to automatically create a hot folder for cost calculation jobs. Also, a hot folder for cost calculation jobs may be configured to receive only fixed job image data and job ticket.

As thus described, according to the present embodiment, a hot folder for print jobs and a hot folder for cost calculation jobs are prepared. Then, a determination is made regarding which of the hot folders a job has been submitted to. This eliminates the need for a job ticket to include information indicating whether the job is a print job or a cost calculation job. Thus, the job ticket in the job used for cost calculation can be submitted as a print job to the hot folder for print jobs as it is. This way, in performing cost calculation, a user does not need to edit settings on the job ticket so that the settings may be different from those for a print job, and this enables improvement in work efficiency.

### <<Other Embodiments>>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An image formation apparatus (100) comprising:
a reception unit (203, 204) configured to receive a print job for performing printing using a print unit and a cost calculation job for calculating cost of printing to be performed using the print unit and
a control unit (204) configured to display, on a display unit (206), a first screen displaying a print job list including a print job received but not a cost calculation job received and a second screen displaying a cost calculation job list including a cost calculation job received but not a print job received, wherein
each of the first screen and the second screen includes a field (513, 514) for receiving an instruction for switching display to the first screen or to the second screen.

2. The image formation apparatus according to claim 1, wherein the control unit performs control so that
in a case where the received job is a print job, the received job is added to the print job list, and
in a case where the received job is a cost calculation job for calculating cost required for printing, the received job is added to the cost calculation job list.

3. The image formation apparatus according to claim 2, wherein
the control unit determines whether the received job is a print job or a cost calculation job based on information included in the job.

4. The image formation apparatus according to claim 2, wherein
the control unit determines whether the received job is a print job or a cost calculation job based on a route through which the job is received.

5. The image formation apparatus according to claim 4, wherein
a hot folder for print jobs and a hot folder for cost calculation jobs are prepared as hot folders configured to assign predetermined setting information to a job,
the reception unit receives a job through submission of the job to the hot folder for print jobs or to the hot folder for cost calculation jobs, and
the control unit determines whether the submitted job is a print job or a cost calculation job based on the hot folder to which the job is submitted.

6. The image formation apparatus according to claim 5, wherein
in a case where the hot folder is not prepared, the control unit creates the host folder before submission of the job.

7. The image formation apparatus according to any one of claims 2 to 6, wherein
after calculating the cost based on the cost calculation job, the control unit deletes data on the cost calculation job.

8. The image formation apparatus according to any one of claims 2 to 6, wherein
after calculating the cost based on the cost calculation job, the control unit saves data on the cost calculation job.

9. The image formation apparatus according to any one of claims 2 to 8, wherein
the control unit performs control to display a first screen including the cost calculation job list on the display unit, and
the first screen includes a field for receiving an operation and an instruction regarding the cost calculation job.

10. The image formation apparatus according to claim 9, wherein
the first screen includes a field for receiving an operation and an instruction to delete the cost calculation job.

11. The image formation apparatus according to any one of claims 8 to 10, wherein
the first screen includes a field for receiving an operation and an instruction to add the cost calculation job as a print job.

12. The image formation apparatus according to any one of claims 8 to 11, wherein
the first screen includes a field for receiving an operation and an instruction to recalculate the cost based on the cost calculation job.

13. The image formation apparatus according to any one of claims 8 to 12, wherein
the control unit performs control to display a second screen including the print job list on the display unit, and
the second screen includes a field for receiving an operation and an instruction regarding the print job.

14. The image formation apparatus according to claim 13, wherein
on each of the first screen and the second screen, the control unit displays a predetermined notification in a case where a print job or a cost calculation job is being processed.

15. The image formation apparatus according to any one of claims 2 to 14, wherein
based on user operation, the control unit starts print processing based on the print job added to the print job list, and
not based on user operation, the control unit starts cost calculation processing based on the cost calculation job added to the cost calculation job list.

16. The image formation apparatus according to any one of claims 2 to 15, wherein
regarding a result of cost calculation processing performed based on the cost calculation job, the control unit performs at least one of displaying the result on the display unit and outputting the result to a file.

17. The image formation apparatus according to any one of claims 2 to 16, wherein
the control unit performs cost calculation processing based on the cost calculation job using information indicative of a status of an image formation unit of the image formation apparatus.

18. The image formation apparatus according to claim 17, further comprising a generation unit configured to generate raster image data based on the received job, wherein
the control unit performs the cost calculation processing based on the cost calculation job based on the generated raster image data and the status of the image formation unit of the image formation apparatus.

19. The image formation apparatus according to any one of claims 2 to 17, further comprising a generation unit configured to perform generation processing to generate raster image data based on the received job, wherein
the control unit determines a priority level of the cost calculation job in the generation processing, and
the generation processing is performed on the received job based on the priority level thus determined.

20. A method for controlling an image formation apparatus having a print unit, the method comprising:
receiving a print job for performing printing using the print unit and a cost calculation job for calculating cost of printing to be performed using the print unit and
displaying, on a display unit, a first screen displaying a print job list including a print job received but not a cost calculation job received and a second screen displaying a cost calculation job list including a cost calculation job received but not a print job received, wherein
each of the first screen and the second screen includes a field for receiving an instruction for switching display to the first screen or to the second screen.
